# EUROPÄISCHE PATENTSCHRIFT

(11) **EP 1 788 696 B1**
(45) Veröffentlichungstag und Bekanntmachung des Hinweises auf die Patenterteilung: **11.11.2020**
(21) Anmeldenummer: 06020040.9
(22) Anmeldetag: 25.09.2006
(51) Int. Cl.: H02M 3/335, H02M 1/00, H02M 1/15

(54) **Regelschaltung zur Strom- und Spannungsregelung in einem Schaltnetzteil**
Regulation circuit for current and voltage regulation in a switched mode power supply
Circuit de régulation pour la régulation du courant et de la tension dans un circuit d'alimentation de puissance à découpage

(30) Priorität: 18.11.2005 DE 102005055160
(43) Veröffentlichungstag der Anmeldung: 23.05.2007
(73) Patentinhaber: Power Systems Technologies GmbH, 48346 Ostbevern (DE)
(72) Erfinder: Schröder, Ralf, 49219 Glandorf (DE)
(74) Vertreter: Grünecker Patent- und Rechtsanwälte PartG mbB

(56) Entgegenhaltungen:
- WO-A2-2004/082119
- US-A1- 2002 131 279
- US-A1- 2004 037 093
- US-B1- 6 208 530

## Beschreibung

Die Erfindung betrifft eine Schaltung zur Strom- und Spannungsregelung in einem primärseitig gesteuerten Schaltnetzteil. Das Schaltnetzteil weist einen Transformator mit einer primärseitigen und einer sekundärseitigen Hauptwicklung auf, wobei elektrische Energiepulse von der Primärseite zur Sekundärseite übertragen werden. Ein primärseitiger Schalter schaltet einen Primärstrom durch die primärseitige Hauptwicklung ein und aus. Des weiteren bezieht sich die Erfindung auf ein Verfahren zum Regeln der Ausgangsspannung und des Ausgangsstromes in einem primärseitig gesteuerten Schaltnetzteil.

Der Betrieb von elektrischen Geräten erfordert meist eine genau definierte Versorgungsspannung, damit diese einwandfrei funktionieren, wobei diese Versorgungsspannung in vielen Fällen unterschiedlich von der Netzspannung ist, die vom Stromnetz bereitgestellt wird. Folglich enthalten viele elektrische Geräte, wie beispielsweise Computer oder Fernsehgeräte, ein Netzteil. Aber auch batteriegespeiste Geräte besitzen Netzteile, um die internen Betriebsspannungen unabhängig vom Ladezustand der Batterie konstant zu halten.

Die Aufgabe des Netzteils ist das Umwandeln einer Speisespannung, meist der Netzspannung, in eine für die Versorgung der elektrischen Geräte nötige, höhere oder niedrigere Versorgungsspannung. An einer Primärseite des Netzteils liegt dabei die Netzspannung an und an einer Sekundärseite wird das elektrische Gerät angeschlossen.

Des weiteren ist eine direkte ohmsche Verbindung zwischen dem Stromnetz und dem elektrischen Gerät aus Sicherheitsgründen nicht erlaubt. Deshalb werden die Primär- und Sekundärseite galvanisch voneinander getrennt, sodass die hohe Wechselspannung des Stromnetzes nicht die elektrischen Geräte erreichen kann. Dies erfolgt durch einen Transformator, der außerdem elektrische Energie von der Primärseite auf die Sekundärseite überträgt.

An der Sekundärseite muss die Ausgangsleistung geregelt werden, um einen sicheren Betrieb der Geräte zu ermöglichen. Die dafür nötige Regelung kann sowohl primärseitig als auch sekundärseitig erfolgen, wobei unterschiedliche Vor- und Nachteile erreicht werden. Sekundärseitig gesteuerte Netzteile weisen oftmals keine galvanische Trennung zwischen Eingang und Ausgang auf, folglich werden diese dort eingesetzt, wo eine galvanische Trennung schon vorliegt, wie beispielsweise bei batteriebetriebenen Geräten.

Die vorliegende Erfindung bezieht sich auf ein primärseitig geregeltes Schaltnetzteil.

Dabei ist bekannt, dass Schaltnetzteile intern nicht mit der Frequenz der Wechselspannung des Stromnetzes, die im europäischen Stromnetz bei etwa 50 Hz liegt, arbeiten, sondern mit einer höheren Taktfrequenz, die in der Regel über 20 kHz liegt.

Diese Erhöhung der Frequenz erfolgt durch den primärseitigen Schalter, der beispielsweise durch mindestens einen MOSFET gebildet sein kann. Alternativ können dafür auch Insulated Gate Bipolar Transistoren (IGBT) verwendet werden. Die erforderliche Gleichspannung wird in einer Gleichrichtereinheit aus der Wechselspannung des Stromnetzes erzeugt. Anschließend wird die Gleichspannung mit einer bestimmten Frequenz an- und abgeschaltet, woraus eine Wechselspannung mit entsprechender Frequenz entsteht.

Die Vorteile von Schaltnetzteilen im Vergleich zu konventionellen linear gesteuerten Netzteilen ergeben sich aus der deutlich höheren Frequenz, mit welcher der Transformator intern angesteuert wird. Da die erforderlichen Windungszahlen des Transformators umgekehrt proportional zur Frequenz sinken, lassen sich dadurch die Kupferverluste stark reduzieren und der notwendige Transformator wird wesentlich kleiner. Das Netzteil kann leichter und kompakter gebaut werden, da der verwendete Transformator keinen schweren Eisenkern mehr enthalten muss. Des weiteren können auch andere Bauteile des Schaltnetzteiles kleiner gebaut werden, was zu reduzierten Kosten führt.

Ein Nachteil von Schaltnetzteilen sind die hörbaren Geräusche, die erzeugt werden können. Die Geräusche entstehen zum einen durch die Schaltströme, die bei höheren Frequenzen eine deutlich höhere Energie besitzen.

Zum anderen werden Geräusche durch die frequenzgesteuerte Regelung des Schaltnetzteiles erzeugt. Der Grund dafür ist das schnelle An- und Abschalten des Transformators, wodurch, falls die Frequenz in einem vom Menschen hörbaren Frequenzbereich liegt, ein Brummen oder Summen hörbar ist.

Wie bereits erwähnt, soll der Ausgang vom Eingang galvanisch getrennt sein, daher erfolgt die Ansteuerung des Transformators durch die erzeugte hochfrequente Wechselspannung. Der Transformator umfasst mindestens eine primärseitige und mindestens eine sekundärseitige Hauptwicklung, die magnetisch miteinander gekoppelt sind. Ein Schalter an der primärseitigen Hauptwicklung wird üblicherweise dazu verwendet, den Strom durch die Primärwicklung an- und abzuschalten. Auf diese Weise wird elektrische Energie in die primärseitige Hauptwicklung geladen.

An der sekundärseitigen Wicklung wird die nötige Ausgangsleistung abgegeben, wobei die gespeicherte Energie der primärseitigen Wicklung nach jedem Laden auf die sekundärseitige Wicklung übertragen wird.

Durch den primärseitigen Schalter werden also Energiepulse mit einer hohen Taktfrequenz aus dem Stromnetz entnommen und durch magnetische Kopplung der Primär- und Sekundärwicklung an den Ausgang übertragen. Die eigentliche Übertragung oder Umwandlung der Energie kann zu unterschiedlichen Zeitpunkten erfolgen, wonach man Sperr-, Durchfluss- und Resonanzwandler unterscheidet.

Im folgenden soll nur der Fall des Sperrwandlers betrachtet werden, bei dem während der Sperrphase des Schalters, also, wenn kein Strom durch die primärseitige Hauptwicklung fließt, die Energieübertragung von Primärseite auf Sekundärseite erfolgt.

Wenn als Ausgangsspannung eine Gleichspannung erzeugt werden soll, wie es bei vielen Verbrauchern wie z.B. Haushaltsgeräten, Mobiltelefonen, PC und dergleichen der Fall ist, so muss in einer zusätzlichen sekundärseitigen Gleichrichterstufe die an der Sekundärwicklung induzierte Wechselspannung in eine Gleichspannung umgewandelt werden. Ein Tiefpassfilter glättet die Gleichspannung zusätzlich und verringert damit die Welligkeit der Ausgangsspannung.

Die Regelung der Ausgangsleistung erfolgt dabei üblicherweise über eine geschlossene Regelschleife, wobei das Ziel ist, die Ausgangsspannung unter allen Betriebsbedingungen konstant zu halten. Eine bekannte Lösung zum Erzeugen einer Regelgröße ist die Rückkopplung mittels einer primärseitigen Hilfswicklung, wie dies z. B. in der WO 2004/082119 A2 gezeigt ist. In der primärseitigen Hilfswicklung wird nach dem Ausschalten des primärseitigen Schalters ein Spannungspuls induziert. Dieser wird dazu verwendet, eine Hilfsspannung zu erzeugen, die proportional zur Ausgangsspannung ist. Die Regelung sorgt dafür, dass die Spannung an der Hilfswicklung im Regelbereich liegt. Da diese Information nur während der Sperrphase, also während der Schalter ausgeschaltet ist, gewonnen werden kann, ist eine Abtasthalteschaltung enthalten, die den Spannungswert für Pausenzeit und Flussphase hält.

Der Wert der Hilfsspannung bildet den Istwert und wird mit einer Referenzspannung, die den Sollwert darstellt, verglichen. Die Differenz zwischen Ist- und Sollwert, also die Regelabweichung, beeinflusst die Ansteuerung des primärseitigen Schalters, so dass die übertragene Energie eingestellt werden kann. Netzschwankungen sowie Änderungen des Laststromes werden von dem Regelkreis ausgeregelt.

Sowohl die Steuerung der Frequenz als auch die Pulsbreite werden durch die Schalteransteuerung bestimmt. Dabei legt der Einschaltzeitpunkt die Dauer der Sperrphase und damit die Frequenz fest. Der Ausschaltzeitpunkt bestimmt die Stromflussdauer und damit die Pulsbreite, die mit der zu übertragenden Energie korrespondiert.

Eine bekannte Ansteuerschaltung für ein solches primärgesteuertes Schaltnetzteil ist der veröffentlichten Internationalen Patentanmeldung WO 2004/082119 A2 zu entnehmen. Der Aufbau dieser bekannten Anordnung ist in der **Figur 8** gezeigt und seine Funktionsweise soll im Folgenden im Detail erläutert werden.

Zu den wichtigsten Komponenten gehört ein Transformator, der die Primär- und Sekundärseite galvanisch trennt und eine primärseitige **PW** und sekundärseitige Hauptwicklung **VS** aufweist. Die beiden Hauptwicklungen sind magnetisch gekoppelt, so dass elektrische Energiepulse von der Primärseite auf die Sekundärseite übertragen werden.

Der Energiefluss in der primärseitigen Hauptwicklung wird durch einen primärseitigen Schalter **T1** geregelt. Durch das Ein- und Ausschalten des Schalters **T1** kann der Primärstrom durch die primärseitige Hauptwicklung **PW** ein- und ausgeschaltet werden. Die gespeicherte Energie in der primärseitigen Hauptwicklung hängt von der Stromstärke durch die Wicklung zum Ausschaltzeitpunkt ab. Je höher der Strom, umso größer ist die gespeicherte Energie, die anschließend auf die Sekundärseite übertragen wird.

Die Übertragung des Energiepulses erfolgt während der Sperrphase des Schalters **T1,** also dann, wenn kein Strom durch den Schalter und die primärseitige Hauptwicklung fließt. Das Schalten des Transistors **T1** wird durch einen Treiber **801** gesteuert, der von der Versorgungsspannung **VP** gespeist wird.

Zusätzlich besitzt der Transformator eine primärseitige Hilfswicklung **HW**, in der nach dem Ausschalten des primärseitigen Schalters **T1** ein Spannungspuls induziert wird. Der induzierte Spannungspuls an der Hilfswicklung ist proportional zu der Ausgangsspannung, wobei die Ausgangsspannung von einer an der Sekundärseite anliegenden Last abhängt. Die Höhe des induzierten Spannungspulses an der Hilfswicklung wird als Regelgröße verwendet und so geregelt, dass sie in einem Regelbereich liegt.

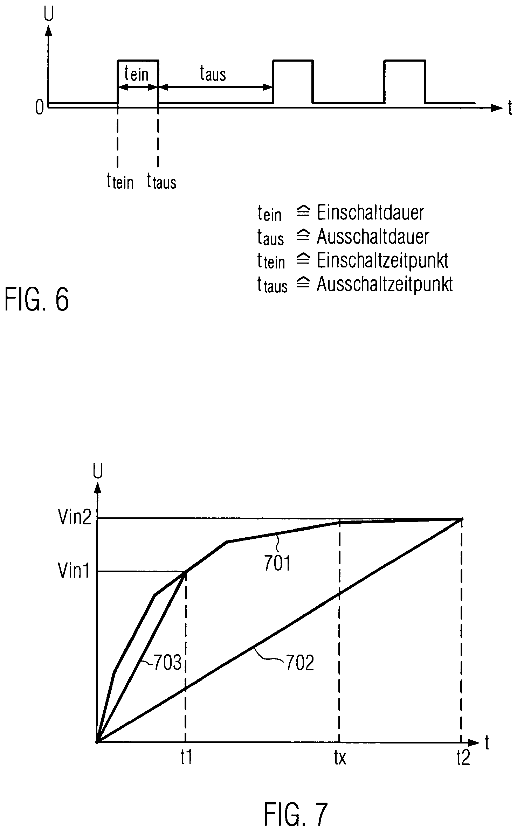

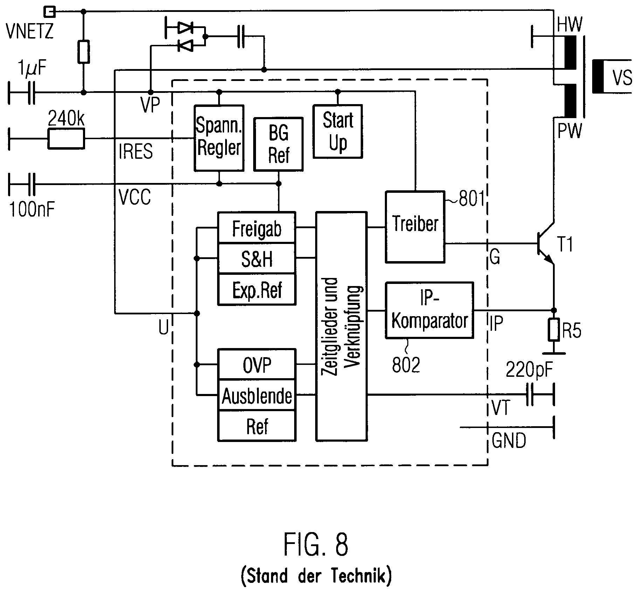

Das Stellglied für die Regelung bildet der Transistor **T1** und dessen Ein- und Ausschaltzeitpunkt. **Figur 6** zeigt den Verlauf des Ansteuersignals **G** für den primärseitigen Schalter **T1** aus der Anordnung der **Figur 8****.** Durch den Einschaltzeitpunkt **tₜₑᵢₙ** kann die Ausschaltdauer **tₐᵤₛ** und damit die Taktfrequenz geregelt werden. Durch den Ausschaltzeitpunkt **tₜₐᵤₛ** kann die Energiepulsbreite **tₑᵢₙ** eingestellt werden und damit die zu übertragende Energie in der primärseitigen Hauptwicklung.

Der Ausschaltzeitpunkt wird mit Hilfe eines Primärstromkomparators **802** bestimmt. Der Primärstrom durch die primärseitige Hauptwicklung **PW** und den Transistor **T1** fließt auch in den Widerstand **R5,** wobei der Strom einen Spannungsabfall am Widerstand **R5** hervorruft. Dieser Spannungsabfall wird am Primärstromkomparator **802** mit einer festen Referenzspannung verglichen. Wenn die Referenzspannung überschritten wird, schaltet der Treiber **801** das Steuersignal **G** so, dass der Transistor **T1** nicht mehr leitend ist und sperrt. Der Ausschaltzeitpunkt wird im Stand der Technik also nicht von der Regelgröße an der primärseitigen Hilfswicklung beeinflusst, so dass stets die gleiche Energiemenge pro Puls übertragen wird.

Der Einschaltzeitpunkt wird durch die Regelgröße bestimmt. Da diese Information nur während der Sperrphase, also während der Schalter ausgeschaltet ist, gewonnen werden kann, ist eine Abtasthalteschaltung **S&H** enthalten, die den Spannungswert für Pausenzeit und Flussphase hält.

Die Regelgröße beeinflusst die Bestimmung des Einschaltzeitpunkts des primärseitigen Schalters **T1**. Die Regelgröße wird mit einer mit der Zeit exponentiell ansteigenden Referenzspannung **Exp.Ref** verglichen. Wenn die exponentielle Referenzspannung die Regelgröße erreicht, wird der Transistor **T1** eingeschaltet und es fließt ein Strom durch die primärseitige Hauptwicklung.

Bei der in der Druckschrift WO 2004/082119 A2 gezeigten Anordnung ändert sich die Ausgangsspannung mit der an der Sekundärseite anliegenden Last. Um diese Änderungen auszuregeln, wird die Taktfrequenz erhöht oder erniedrigt. Dies erfolgt ausschließlich über die Dauer der Sperrphase, also über den Einschaltzeitpunkt. Dabei bleibt der Ausschaltzeitpunkt relativ zum Einschaltzeitpunkt und damit die Stromflussdauer immer gleich.

Bei geringer Last wird weniger Energie an der Ausgangsseite verbraucht. Da aber pro Puls die gleiche Energie auf die Ausgangsseite übertragen wird, muss die Taktfrequenz der Schalteransteuerung erniedrigt werden, um weniger Energie zu übertragen. Steigt an der Ausgangsseite die anliegende Last wieder, so wird dementsprechend die Taktfrequenz erhöht, um eine größere Energiemenge an der Sekundärseite bereitzustellen.

Wie bereits erwähnt, besteht bei der bekannten Ansteuerschaltung das Problem, dass die Ausgangsspannung belastungsabhängig ist, da die Frequenz abhängig von der Abweichung der Hilfsspannung vom Sollwert eingestellt wird. Bei geringer Last steigt die Ausgangsspannung und damit korrespondierend die Hilfsspannung an der Hilfswicklung. Mit steigender Last sinkt die Ausgangsspannung wieder und damit korrespondierend die Hilfsspannung an der Hilfswicklung.

Eine Aufgabe, die der vorliegenden Erfindung zugrunde liegt, besteht somit darin, die Lastabhängigkeit der Ausgangsspannung zu reduzieren.

Ein weiteres Problem der zitierten Ansteuerschaltung besteht darin, dass bei geringer Last energiereiche Pulse mit niedrigen Frequenzen geschaltet werden, wobei hörbare Geräusche entstehen können. Ein damit verbundenes Problem ist außerdem eine relativ große Welligkeit der Ausgangsspannung. In der Druckschrift US 2002/131279 A1 wird die Ausschaltdauer geregelt, um die hörbaren Frequenzen zu beseitigen.

Somit besteht eine weitere Aufgabe, die der Erfindung zugrunde liegt, darin, diese Geräusche sowie die Welligkeit der Ausgangsspannung zu vermindern. Ein weiteres Problem ist die Störanfälligkeit der Taktfrequenzregelung. Bei dieser Regelung wird die an der Hilfswicklung abgegriffene Spannung mit einer exponentiellen Referenz verglichen, um einen Zeitpunkt zu bestimmen, bei dem der Schalter wieder eingeschaltet wird, so dass Strom in der Wicklung fließt. Die Referenzspannung steigt so lange näherungsweise, entsprechend einer Funktion U_ref = k(1-e^{(-t/tau)}) an, bis sie mit der abgegriffenen Spannung übereinstimmt.

Der Ausgang der Abtasthaltevorrichtung wird für eine kurze Zeit konstant gehalten, währenddessen der Vergleich mit der exponentiellen Referenz erfolgt.

Die exponentielle Referenzspannung nähert sich der konstant gehaltenen Hilfsspannung speziell bei längeren Schaltzeiten nur langsam an. Für eine vergleichsweise lange Zeitdauer vor dem Schnittpunkt der exponentiellen Referenzspannung mit der konstant gehaltenen Ausgangsspannung ist somit der Unterschied zwischen Referenz- und Ausgangsspannung gering, wodurch sich Störungen auf die Bestimmung des Zeitpunktes stark auswirken können. Dies ist als Kurve **701** in **Figur 7** dargestellt.

Somit besteht eine weitere Aufgabe, die der Erfindung zugrunde liegt, darin, die Störanfälligkeit bei der zeitlichen Bestimmung des Einschaltzeitpunktes zu reduzieren.

Diese Aufgaben werden erfindungsgemäß durch die Regelschaltungen mit den Merkmalen der unabhängigen Patentansprüche gelöst.

Vorteilhafte Weiterbildungen der vorliegenden Erfindung sind Gegenstand mehrerer Unteransprüche.

Entsprechend der vorliegenden Erfindung ist ein primärseitig gesteuertes Schaltnetzteil mit den Merkmalen von Anspruch 1 voresehen.

Entsprechend den Merkmalen von Anspruch 1 ist die Regelgröße so an den Primärstromkomparator zurückgeführt, dass der Ausschaltzeitpunkt des primärseitigen Schalters zusätzlich in Abhängigkeit von der Regelgröße so beeinflussbar ist, dass die Zeitdauer, während welcher der Primärstrom durch die primärseitige Hauptwicklung fließt, unterschiedlich reduziert wird. Dadurch werden speziell bei geringer Last energieärmere Pulse geschaltet und die Taktfrequenz des Schalters erhöht. Durch die Erhöhung der Frequenz und durch die Verringerung der übertragenen Energie werden sowohl die erzeugten Betriebsgeräusche reduziert, als auch die Welligkeit der Ausgangsspannung erniedrigt.

Darüber hinaus ist die Regelschaltung weiterhin so ausgebildet, dass sie einen Einschaltzeitpunkt des primärseitigen Schalters in Abhängigkeit von der Regelgröße bestimmt und dadurch die Zeitdauer, in der kein Primärstrom durch die primärseitige Hauptwicklung fließt, festlegt. Sowohl das Aus- als auch das Einschalten des Schalters wird von der Regelschaltung geregelt. Keine weitere Regelung diesbezüglich ist notwendig.

Die Rückführung der Regelgröße erfolgt gemäß einer vorteilhaften Ausführungsform über einen Spannungsteiler, was schaltungstechnisch leicht zu realisieren ist.

Gemäß einer vorteilhaften Ausführungsform verhindert eine Verstärkung der Regelgröße vor der Rückführung, dass das Signal der Regelgröße zu schwach ist.

Gemäß einer vorteilhaften Ausführungsform ist ein Operationsverstärker über ein Netzwerk so verbunden, dass das Netzwerk die Verstärkung des Operationsverstärkers einstellt. Somit ist die Verstärkung variabel dimensionierbar.

Des weiteren ist es vorteilhaft, dass der Spannungsteiler aus zwei Widerständen besteht, wobei ein erster Anschluss des ersten Widerstandes mit einem Ausgang des Verstärkers verbunden ist und ein zweiter Anschluss des ersten Widerstandes mit einem Eingang des Primärstromkomparators und mit einem ersten Anschluss des zweiten Widerstandes verbunden ist; und wobei ein zweiter Anschluss des zweiten Widerstandes mit einem, den Primärstrom führenden, Anschluss des primärseitigen Schalters verbunden ist.

Entsprechend eines weiteren Aspektes der vorliegenden Erfindung weist die Regelschaltung einen Verstärker auf, wobei ein nicht-invertierender Eingang des Verstärkers mit einem Ausgang der Abtasthaltevorrichtung verbunden ist, ein Ausgang des Verstärkers über ein Rückkopplungsnetzwerk mit einem invertierenden Eingang des Verstärkers verbunden ist, wobei das Rückkopplungsnetzwerk einen ersten Widerstand, einen Kondensator, der mit dem ersten Widerstand in Serie geschaltet ist, einen zweiten Widerstand, der parallel zu dem ersten Widerstand und dem Kondensator geschaltet ist, und einen dritten Widerstand, der seriell zu der Parallelschaltung aus dem ersten, dem zweiten Widerstand und dem Kondensator geschaltet ist und der mit Masse verbunden ist, aufweist. Durch die hohe Verstärkung kann eine Regelgröße genauer geregelt werden.

Entsprechend eines weiteren Aspektes der vorliegenden Erfindung ist ein Korrekturnetzwerk so zwischen die primärseitige Hilfswicklung und die Abtasthaltevorrichtung geschaltet, dass die aus dem Spannungspuls an der primärseitigen Hilfswicklung erzeugte Spannung in Abhängigkeit von einer an der Sekundärseite anliegenden Last steigt. Dadurch kann die Lastabhängigkeit der Ausgangspannung reduziert werden.

Gemäß einer vorteilhaften Ausführungsform wird die Spannung an einem Kondensator von einer an der Sekundärseite anliegenden Last abhängig geschaltet und die Kondensatorspannung verringert über einen Widerstand die am primärseitigen Messeingang anliegende Spannung.

Des weiteren ist es vorteilhaft, dass das Korrekturnetzwerk drei Widerstände, eine Diode und einen Kondensator aufweist, wobei ein erster Anschluss des ersten Widerstandes mit der Regelschaltung und ein zweiter Anschluss des ersten Widerstandes mit der Hilfswicklung verbunden ist; wobei ein erster Anschluss des zweiten Widerstandes mit einem ersten Anschluss des ersten Widerstandes und ein zweiter Anschluss des zweiten Widerstandes mit einem ersten Anschluss des Kondensators verbunden ist; wobei ein erster Anschluss des dritten Widerstandes mit einem ersten Anschluss des Kondensators verbunden ist und ein zweiter Anschluss des dritten Widerstandes mit einem Anodenanschluss der Diode verbunden ist, wobei ein Kathodenanschluss der Diode mit der Hilfswicklung verbunden ist, und wobei ein zweiter Anschluss des Kondensators mit Masse verbunden ist.

Entsprechend eines weiteren Aspektes der vorliegenden Erfindung bestimmt die Regelschaltung den Einschaltzeitpunkt des primärseitigen Schalters durch Vergleich der Regelgröße mit einer Vergleichspannung und ist weiter so ausgebildet, dass die Vergleichsspannung in Abhängigkeit von der Regelgröße bestimmt wird. Dadurch wird nicht eine exponentiell ansteigende Referenzspannung für den Vergleich verwendet, sondern eine linear ansteigende Referenzspannung, die von der Ausgangsspannung selbst abhängt. Der Vorteil ist, dass die Störanfälligkeit bei der Bestimmung des Einschaltzeitpunktes reduziert wird.

Gemäß einer vorteilhaften Ausführungsform ist die Regelschaltung weiterhin so ausgebildet, dass sie einen Primärstromkomparator aufweist, der einen Ausschaltzeitpunkt des primärseitigen Schalters in Abhängigkeit von dem Primärstrom bestimmt. Sowohl das Aus- als auch das Einschalten des Schalters wird von der Regelschaltung geregelt. Keine weitere Regelung diesbezüglich ist notwendig.

Gemäß einer vorteilhaften Ausführungsform wird die Vergleichsspannung durch das Laden eines Kondensators bestimmt.

Gemäß einer vorteilhaften Ausführungsform steuert ein Transistor das Laden des Kondensators.

Des weiteren ist es vorteilhaft, dass ein erster Verstärker innerhalb der Regelschaltung so ausgebildet ist, dass die Regelgröße verstärkt ist, wobei ein nicht-invertierender Eingang des ersten Verstärkers mit einem Kollektoreingang des ersten Transistors verbunden ist, ein invertierender Eingang des ersten Verstärkers mit dem Ausgang der Abtasthaltevorrichtung und mit einem nicht-invertierenden Eingang eines zweiten Verstärkers verbunden ist, ein Ausgang des ersten Verstärkers mit einem Basiseingang des ersten Transistors verbunden ist, ein Emitterausgang des ersten Transistors mit einem ersten Anschluss des Kondensators verbunden ist, der Kollektoreingang des ersten Transistors über einen Widerstand mit einer Konstantspannungsquelle verbunden ist, der erste Anschluss des Kondensators mit einem invertierenden Eingang des zweiten Verstärkers und einem Kollektoreingang eines zweiten Transistors verbunden ist, ein Ausgang des zweiten Verstärkers ein Steuersignal beeinflusst, ein zweiter Anschluss des Kondensators mit Masse verbunden ist, ein Emitterausgang des zweiten Transistors mit Masse verbunden ist, und ein Basiseingang des zweiten Transistors mit einem internen Entladesignal verbunden ist.

Die Erfindung wird anhand der beiliegenden Zeichnungen im folgenden näher erläutert. Ähnliche oder korrespondierende Einzelheiten sind in den Figuren mit denselben Bezugszeichen versehen. Es zeigen:
- Figur 1:: ein Blockschaltbild einer Regelschaltung gemäß einer ersten Ausführungsform der vorliegenden Erfindung mit einem Spannungsteiler in ihrer Applikationsumgebung;
- Figur 2:: ein Blockschaltbild eines Teils einer Regelschaltung gemäß einer zweiten Ausführungsform der vorliegenden Erfindung;
- Figur 3:: ein Blockschaltbild einer Regelschaltung gemäß einer weiteren Ausführungsform der vorliegenden Erfindung mit einem Korrekturnetzwerk;
- Figur 4:: ein Blockschaltbild einer Regelschaltung gemäß einer weiteren Ausführungsform der vorliegenden Erfindung mit einem Spannungsteiler und einem Korrekturnetzwerk;
- Figur 5:: ein Blockschaltbild eines Spannungs-Zeitwandlers;
- Figur 6:: den qualitativen Zeitverlauf eines Ansteuersignals für den primärseitigen Schalter;
- Figur 7:: Signaldiagramm von einem Spannungsvergleich innerhalb des SpannungsZeitwandlers;
- Figur 8:: ein Blockschaltbild einer Regelschaltung aus dem Stand der Technik.

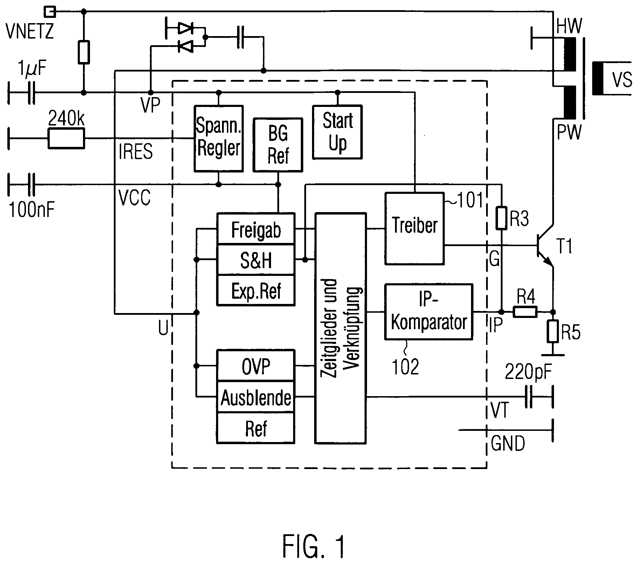

**Figur 1** zeigt ein Blockschaltbild einer Regelschaltung zum Regeln der Ausgangsspannung und/oder des Ausgangsstromes in einem primärseitig gesteuerten Schaltnetzteil gemäß einer ersten Ausführungsform der vorliegenden Erfindung.

Wie oben erläutert, wird bei der Regelschaltung gemäß der Druckschrift WO 2004/082119 A2 der Ausschaltzeitpunkt des Transistors **T1** ohne Einfluss der Regelgröße bestimmt. Die übertragene Energie pro Puls wird also nicht von der Ausgangsspannung beeinflusst. Um am Ausgang die erforderliche Spannung bereitzustellen, kann die Regelung nur die Taktfrequenz einstellen. Wird mehr Energie benötigt, falls eine große Last am Ausgang anliegt, so wird die Frequenz erhöht. Dementsprechend wird bei geringer Last die Frequenz wieder gesenkt. Bei geringer Last wird die gleiche Energie pro Puls übertragen wie bei großer Last.

Gemäß einem Aspekt der vorliegenden Erfindung wird demgegenüber die Regelgröße, und damit die Information über eine an der Sekundärseite anliegenden Last, zu dem Primärstromkomparator **102** zurückgekoppelt, so dass der Ausschaltzeitpunkt des Transistors **T1** in Abhängigkeit von der Regelgröße beeinflussbar ist. Die Einschaltdauer **t**_{e**in**}, die vom Ausschaltzeitpunkt bestimmt wird, kann so abhängig von der Last am Ausgang reduziert werden.

Ein Spannungsteiler, der zwei Widerstände **R3** und **R4** aufweist, beeinflusst die Spannung, welche an dem Primärstromkomparator **102** anliegt, so, dass die Referenzspannung früher erreicht wird. Damit wird der Transistor früher abgeschaltet, was zur Folge hat, dass weniger Energie in der primärseitigen Hauptwicklung gespeichert wird. Da weniger Energie an den Ausgang übertragen wird, reagiert die Regelung darauf mit einer Erhöhung der Taktfrequenz am Schalter.

Wenn eine geringe Last am Ausgang anliegt, ist die Ausgangsspannung hoch, so dass die an der primärseitigen Hilfswicklung abgegriffene Hilfsspannung auch groß ist, da diese mit der Ausgangsspannung korrespondiert. Die Hilfsspannung liegt über die Abtasthaltevorrichtung **S&H** auch an dem ersten Widerstand **R3** und an dem zweiten Widerstand **R4** an. Diese zusätzlich anliegende Spannung, die umso größer ist, je geringer die Last am Ausgang ist, erhöht die an dem Primärstromkomparator **102** anliegende Spannung, wodurch die konstante Referenzspannung des Primärstromkomparators früher erreicht wird.

Ein Vorteil, der durch diese Erweiterung erreicht wird, ist, dass, speziell bei geringer Last, energieärmere Pulse übertragen werden und die Übertragung mit einer höheren Frequenz erfolgt. Somit ist der Lastbereich, in dem die Schaltfrequenz im hörbaren Bereich liegt, kleiner. Außerdem entstehen durch die geringere Energie pro Puls weniger Geräusche. Des weiteren wird die Welligkeit der Ausgangsspannung dadurch deutlich verringert.

In einer vorteilhaften Ausgestaltungsform wird die Regelgröße zunächst verstärkt, bevor diese über den Spannungsteiler an den Primärstromkomparator zurückgeführt wird.

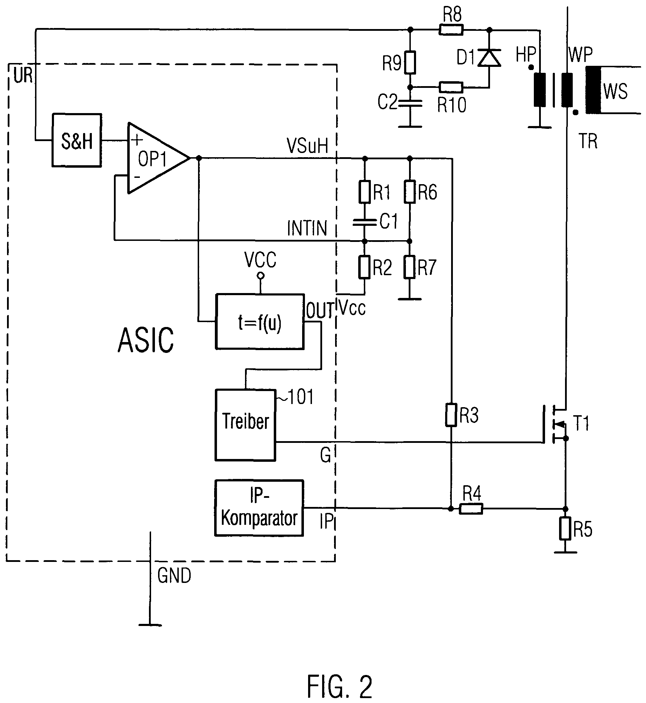

Dazu wird ein Verstärker, hier ein Operationsverstärker, **OP1** verwendet, wie man in der **Figur 2** erkennen kann. Ein Ausgang des Operationsverstärkers **OP1** ist mit einem ersten Anschluss des ersten Widerstandes **R3** verbunden und über ein Netzwerk mit einem invertierenden Eingang des Operationsverstärkers **OP1** verschaltet. Ein nicht-invertierender Eingang des Operationsverstärkers **OP1** ist mit dem Ausgang der Abtasthaltevorrichtung **S&H** verbunden.

Ein zweiter Anschluss des ersten Widerstandes **R3** ist mit einem Eingang des Primärstromkomparators **102** und einem ersten Anschluss des zweiten Widerstandes **R4** verbunden. Ein zweiter Anschluss des zweiten Widerstandes **R4** ist mit dem den Primärstrom führenden Anschluss des primärseitigen Schalters **T1** und mit einem ersten Anschluss des Widerstandes **R5** verschaltet. Ein zweiter Anschluss des Widerstandes **R5** ist mit Masse verbunden.

Das Netzwerk zwischen dem Ausgang und invertierenden Eingang des Operationsverstärkers **OP1** bestimmt die Verstärkung des Operationsverstärkers **OP1** und besteht aus vier Widerständen **R1, R2, R6, R7** und einem Kondensator **C1.** Allerdings kann ein Fachmann andere Netzwerke zur Festlegung der Verstärkung einsetzen.

Ein erster Anschluss des ersten Widerstandes **R1** ist mit einem Ausgang des Operationsverstärkers **OP1,** mit einem ersten Anschluss des dritten Widerstandes **R6** und mit dem ersten Anschluss des ersten Widerstandes **R3** des Spannungsteilers verbunden. Ein zweiter Anschluss des ersten Widerstandes **R1** ist mit einem ersten Anschluss des Kondensators **C1** verbunden. Ein zweiter Anschluss des Kondensators **C1** ist mit dem invertierenden Eingang des Operationsverstärkers **OP1,** mit einem ersten Anschluss des zweiten Widerstandes **R2,** mit einem ersten Anschluss des vierten Widerstandes **R7** und mit einem zweiten Anschluss des dritten Widerstandes **R6** verbunden. Ein zweiter Anschluss des zweiten Widerstandes **R2** ist mit einer Versorgungsspannung **Vcc** verschaltet. Ein zweiter Anschluss des vierten Widerstandes **R7** ist mit Erde verbunden.

Durch das Einfügen des zusätzlichen Verstärkers **OP1** hinter der Abtasthaltevorrichtung **S&H** und durch die variable Beschaltung des Ausgangs sowie des invertierenden Eingangs des Operationsverstärkers **OP1,** ist es möglich, die Lastabhängigkeit der Regelschaltung deutlich zu reduzieren.

Der erste Widerstand **R1** wird in Serie mit dem Kondensator **C1** verschaltet. Parallel dazu ist der dritte Widerstand **R6** verschaltet. Durch das integrierende Verhalten des Kondensators **C1** kann der dazu parallele dritte Widerstand **R6** größer dimensioniert werden. Dadurch steigt die Regelverstärkung, wodurch die Lastabhängigkeit der Spannungsregelung reduziert wird und die Regelgröße genauer geregelt werden kann.

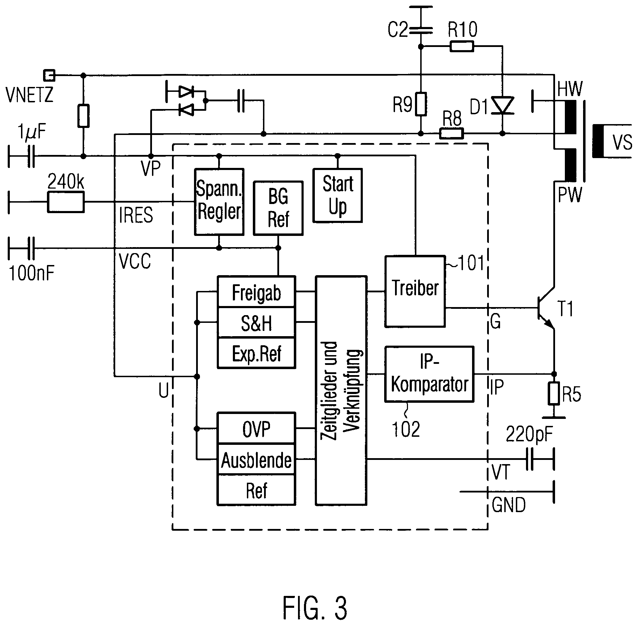

Die Elemente **R8, R9, R10, C2** und **D1** werden im Rahmen der Erläuterung zu **Figur 3** behandelt.

**Figur 3** zeigt ein Blockschaltbild einer Regelschaltung gemäß der vorliegenden Erfindung mit einem Korrektumetzwerk, wie es auch in **Figur 2** enthalten ist und die Funktionsweise dieses Korrekturnetzwerkes soll im Folgenden im Detail erläutert werden.

Eine Last an der Sekundärseite verursacht einen Spannungsfall an der Sekundärleitung, da durch den Innenwiderstand der Leistung bei Stromfluss ein Spannungsfall erfolgt. Dadurch wird die Ausgangsspannung kleiner als wenn kein Strom fließt.

Das Korrekturnetzwerk ist so zwischen die primärseitige Hilfswicklung **HW** und die Abtasthaltevorrichtung **S&H** geschaltet, dass die aus dem Spannungspuls am primärseitigen Messeingang (U) (= Eingang der Abtasthaltevorrichtung **S&H**) erzeugte Spannung in Abhängigkeit von einer an der Sekundärseite anliegenden Last steigt.

Durch entsprechende Dimensionierung des Korrekturnetzwerkes ist es möglich, dass der Anstieg der Ausgangsspannung dem durch die anliegende Last erzeugten Spannungsfall an der Sekundärleitung entspricht.

Der Vorteil dabei ist, dass die Ausgangsspannung lastunabhängig wird, da das Korrekturnetzwerk die Regelgröße entsprechend der anliegenden Last verringert.

Das Korrekturnetzwerk umfasst gemäß einer vorteilhaften Ausführungsform mindestens einen Kondensator **C2** und einen Widerstand **R8,** wobei die Spannung an dem Kondensator von der Last abhängt, sowie einen zweiten und dritten Widerstand **R9, R10** und einen Gleichrichter, beispielsweise eine Diode **D1.** Die Kondensatorspannung verringert mit Hilfe des Widerstandes die am primärseitigen Messeingang (U) anliegende Spannung.

Ein erster Anschluss des ersten Widerstandes **R8** ist mit einem Eingang der Abtasthaltevorrichtung **S&H** und ein zweiter Anschluss des ersten Widerstandes **R8** mit der Hilfswicklung **HW** verbunden. Ein erster Anschluss des zweiten Widerstandes **R9** ist mit einem ersten Anschluss des ersten Widerstandes **R8** und ein zweiter Anschluss des zweiten Widerstandes **R9** mit einem ersten Anschluss des Kondensators **C2** verbunden. Ein erster Anschluss des dritten Widerstandes **R10** ist mit einem ersten Anschluss des Kondensators **C2** verbunden und ein zweiter Anschluss des dritten Widerstandes **R10** mit einem Anodenanschluss der Diode **D1.** Ein Kathodenanschluss der Diode **D1** ist mit der Hilfswicklung **HW** verschaltet und ein zweiter Anschluss des Kondensators **C2** ist mit Masse verbunden.

Wenn der Transistor **T1** eingeschaltet wird, entsteht an der Hilfswicklung **HW** eine negative Spannung, was einen Strom über die Diode **D1,** den dritten Widerstand **R10** und über den ersten Widerstand **R8,** den zweiten Widerstand **R9** zur Folge hat. Der Kondensator **C2** wird dabei negativ aufgeladen.

Wenn der Transistor **T1** ausgeschaltet wird, entsteht zunächst eine positive Spannung an der Hilfswicklung **HW,** die dann auf 0 V sinkt. Durch den dritten Widerstand **R10** und die Diode **D1** kann nun kein Strom fließen, da die Diode **D1** sperrt. Der Kondensator **C2** wird über den ersten Widerstand **R8** und über den zweiten Widerstand **R9** entladen, was einen Spannungsfall an dem ersten Widerstand **R8** erzeugt. Die durch die Entladung des Kondensators **C2** erzeugte Spannung an dem ersten Widerstand **R8** verringert die Höhe des Spannungspulses beim Ausschalten des Transistors **T1.** Diese Verringerung kompensiert bei einer geeigneten Dimensionierung der Korrektumetzwerkelemente dem Spannungsfall an der Sekundärseite durch die Last.

Die Spannung an der Hilfswicklung **HW** steigt an, weil die Regelung die Ausgangsspannung höher einstellt, um die Verringerung der Spannung am primärseitigen Messeingang auszugleichen und den Sollwert zu erreichen. Der Anstieg der Spannung an der Hilfswicklung **HW** ist somit eine indirekte Folge der Verringerung der Spannung am primärseitigen Messeingang.

Die Einschaltdauer des Transistors **T1,** während welcher der Kondensator **C2** aufgeladen wird, ist lastunabhängig, da der Ausschaltzeitpunkt unabhängig von der Regelgröße bestimmt wird. Die Ausschaltdauer des Transistors **T1,** währenddessen der Kondensator **C2** entladen wird, ist lastabhängig, da der Einschaltzeitpunkt in Abhängigkeit von der Ausgangsspannung eingestellt wird.

Bei niedriger Last ist die Taktfrequenz des Transistors **T1** gering und somit die Ausschaltdauer lang. Bei hoher Last ist die Taktfrequenz des Transistors **T1** hoch und somit die Ausschaltdauer kurz.

Der Kondensator **C2** wird bei niedriger Frequenz zwar gleich aufgeladen aber länger entladen, weshalb der Kondensator **C2** eine geringe Ladung trägt. Die geringe Ladung des Kondensators **C2** korrespondiert mit einem geringen Spannungsfall an dem ersten Widerstand **R8.**

Bei hohen Frequenzen, wenn die Last an der Sekundärseite groß ist, ist die Entladungszeit des Kondensators **C2** gering, was folglich zu einer größeren Ladung des Kondenstors **C2** führt. Die höhere Ladung des Kondensators korrespondiert mit einem höheren Spannungsfall an dem ersten Widerstand **R8.**

Somit ist die Höhe des Spannungspulses am primärseitigen Messeingang (U) bei geringer Last nur geringfügig geringer und bei großer Last deutlich geringer.

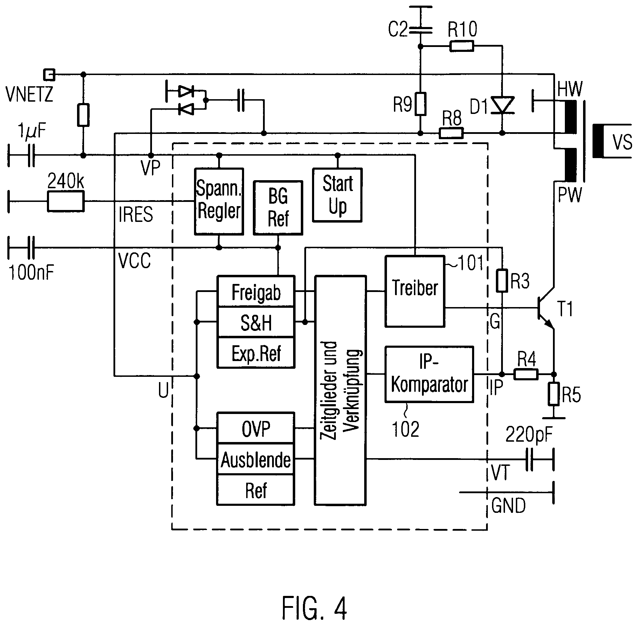

**Figur 4** zeigt ein Blockschaltbild einer Regelschaltung gemäß der vorliegenden Erfindung mit einem Spannungsteiler **R3, R4** und einem Korrekturnetzwerk **R8, R9, R10, D1, C2 ,** wie oben beschrieben.

Die Regelschaltung weist somit sowohl eine Regelung auf, bei welcher der Ausschaltzeitpunkt, also die Einschaltdauer, von der Ausgangsspannung abhängt, als auch eine Regelung bei welcher die Hilfsspannung an der Hilfswicklung **HW,** die als Regelgröße verwendet wird, von der an der Sekundärseite anliegenden Last unabhängig ist.

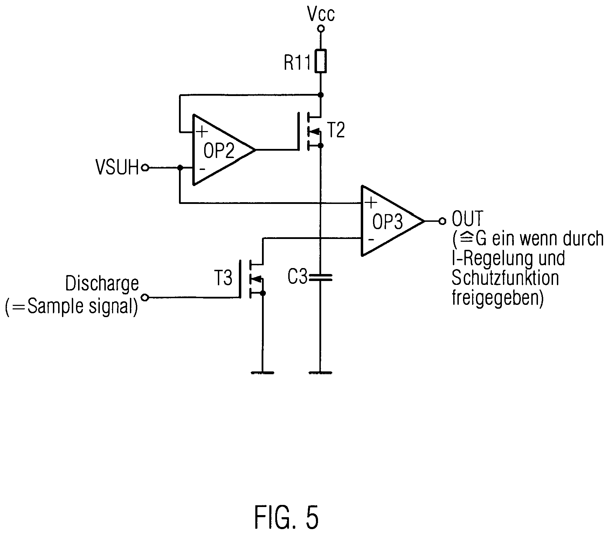

**Figur 5** zeigt ein Blockschaltbild eines Spannungs-Zeitwandlers, der dazu dient, die Aufgabe eines Spannungs-Zeitwandlers in dem Schaltnetzteil besteht darin mit Hilfe der Regelgröße einen Einschaltzeitpunkt für den primärseitigen Schalter **T1** zu bestimmen.

Im Stand der Technik nach WO 2004/082119 A2 wird die Regelgröße mit einer exponentiell ansteigenden Referenzspannung verglichen. Der Zeitpunkt, zu dem beide Spannungen identisch sind wird als Einschaltzeitpunkt des Transistors **T1** verwendet.

In **Figur 7** ist ein Signaldiagramm dieses Spannungsvergleiches gezeigt. Die Spannung **U** ist über die Zeit t aufgetragen. Im Diagramm sind zwei unterschiedliche Eingangsspannungen angegeben, **Vin1** und **Vin2.**

Die exponentiell ansteigende Referenzspannung **701,** mit der die Eingangsspannung verglichen wird, entspricht dem Stand der Technik nach WO 2004/082119 A2.

Die Bestimmung des Einschaltzeitpunktes ist bei einer solchen exponentiellen Referenzspannung stark störanfällig. Für einen langen Zeitraum, bevor die beiden Spannungen identisch sind, ist der Unterschied zwischen Eingangs- und Referenzspannung nur sehr gering. Besonders bei hohen Eingangsspannungen ist dies der Fall. Folglich reicht eine geringe Störungen um einen großen zeitlichen Fehler bei der Bestimmung des Einschaltzeitpunktes zu verursachen.

Bei dem Spannungs-Zeitwandler gemäß der vorliegenden Erfindung in **Figur 5** wird die Referenz- oder Vergleichspannung in Abhängigkeit von der Regelgröße bestimmt. Ein Kondensator **C3** wird geladen, wobei die Spannung an dem Kondensator **C3** als Vergleichsspannung verwendet wird. Das Laden des Kondensators **C3** ist abhängig von der Regelgröße.

Der Spannungs-Zeitwandler weist des weiteren einen Schalter **T2** auf, der in der **Figur 5** als Transistor implementiert ist. Dieser Transistor **T2** wird von der Eingangsspannung gesteuert und damit wird auch der Strom durch den Transistor, der in den Kondensator **C3** fließt, bestimmt.

Der Spannungs-Zeitwandler weist weiterhin, einen ersten Verstärker **OP1,** einen zweiten Operationsverstärker **OP3,** einen zweiten Transistor **T3** und einen Widerstand **R11** auf.

Der erste Verstärker **OP2** ist so ausgebildet, dass die Regelgröße verstärkt wird, wobei ein nicht-invertierender Eingang des ersten Verstärkers **OP2** mit einem Kollektoreingang des ersten Transistors **T2** verbunden ist. Ein invertierender Eingang des ersten Verstärkers ist mit dem Ausgang der Abtasthaltevorrichtung und mit einem nicht-invertierenden Eingang des zweiten Verstärkers **OP3** verschaltet.

Ein Ausgang des ersten Verstärkers **OP2** ist mit einem Basiseingang des ersten Transistors **T2** verbunden. Ein Emitterausgang des ersten Transistors **T2** ist mit einem ersten Anschluss des Kondensators **C3** verbunden.

Der Kollektoreingang des ersten Transistors **T2** ist des weiteren über einen Widerstand **R11** mit einer Konstantspannungsquelle **Vcc** verbunden. Der erste Anschluss des Kondensators **C3** wird mit einem invertierenden Eingang des zweiten Verstärkers **OP3** und einem Kollektoreingang eines zweiten Transistors **T3** verschaltet. Ein Ausgang des zweiten Verstärkers **OP3** ist mit dem Treiber **101** verschaltet und beeinflusst somit das Steuersignal **G** des primärseitigen Schalters. Ein zweiter Anschluss des Kondensators **C3** und ein Emitterausgang des zweiten Transistors **T3** sind mit Masse verbunden. Ein Basiseingang des zweiten Transistors **T3** ist mit einem internen Entladesignal verbunden.

Der Verstärker **OP2** stellt über seine Ausgangsspannung den Strom in dem nachgestellten Transistor **T2** so ein, dass die Spannungen am nicht-invertierenden und invertierenden Eingang des Verstärkers **OP2** gleich sind. Somit ist auch die Spannung am nicht-invertierenden Eingang gleich der Eingangspannung. Die Spannung am Widerstand **R11** ergibt sich aus der Differenz von der Versorgungsspannung **Vcc** und der Eingangsspannung. Da die Versorgungsspannung konstant bleibt, sinkt die Spannung am Widerstand mit steigender Eingangsspannung.

Der Strom durch den Widerstand **R11** fließt auch durch den Transistor **T2** in den Kondensator **C3** und lädt diesen auf. Damit ist der Ladestrom des Kondensators **C3** bei großer Eingangsspannung kleiner als bei geringer Eingangsspannung. Für eine bestimmte Eingangsspannung am ersten Verstärker bleibt der Ladestrom des Kondensators konstant. Der zweite Verstärker **OP3** vergleicht die Eingangsspannung mit der am Kondensator **C3** anliegenden Spannung. Der Transistor **T3** entlädt den Kondensator **C3** nach einem Entladesignal, um eine erneute Bestimmung des Einschaltzeitpunktes zu ermöglichen.

Aus diesem Verhalten ergibt sich eine linear ansteigende Vergleichspannung **702,** die in **Figur 7** ebenso ersichtlich ist. Im Diagramm ist für zwei Eingangsspannungen **Vin1** und **Vin2** mit jeweils unterschiedlicher Steigung (Kurven **702** und **703**) die linear ansteigende Referenzspannung abgebildet. Der Schnittpunkt der beiden linear ansteigenden Referenzspannungen mit den konstanten Eingangsspannungen erfolgt zum Zeitpunkt **t1** bzw. **t2.** Dies korrespondiert mit den identischen Einschaltzeitpunkten für die exponentiell ansteigende Referenzspannung (Kurve **701**)**.**

Der Vorteil der erfindungsgemäßen linearen Vergleichspannung ist die geringere Störanfälligkeit der Zeitbestimmung. Im Diagramm der **Figur 7** ist dieser Vorteil ersichtlich. Zum Zeitpunkt **tx** ist der Abstand zwischen der konstanten Eingangsspannung **Vin2** und der linearen Vergleichspannung deutlich größer, als der Abstand zu der exponentiellen Vergleichsspannung. Die Störung muss also bei der neuen Vergleichspannung deutlich größer ausfallen als bei der exponentiellen Vergleichspannung **701,** um eine identische Zeitverkürzung zu verursachen.

Die Teilaspekte gemäß der bisherigen Ausführungsformen sind wie dies für einen Fachmann klar ist, beliebig miteinander kombinierbar, was aus **Figur 2** ersichtlich ist. Die abgebildete Regelschaltung enthält einen Spannungsteiler **R3**, **R4**, um die Regelgröße an den Primärstromkomparator **102** zurückzuführen. Des weiteren, ist ein Verstärker über ein Rückkopplungsnetzwerk zu der Abtasthaltevorrichtung **S&H** rückgekoppelt. Zusätzlich ist ein Korrekturnetzwerk zwischen die Hilfswicklung **HW** und der Abtasthaltevorrichtung **S&H** geschalten. Der verbesserte Spannungs-Zeitwandler ermöglicht eine weniger störanfällige Bestimmung eines Einschaltzeitpunktes des primärseitigen Schalters **T1.**

## Patentansprüche

1. Primärseitig gesteuertes Schaltnetzteil mit einer Regelschaltung zum Regeln der Ausgangsspannung und/oder des Ausgangsstromes, welches aufweist:
einen Transformator mit einer primärseitigen (PW) und einer sekundärseitigen (VS) Hauptwicklung, wobei elektrische Energiepulse von der primärseitigen zur sekundärseitigen Hauptwicklung übertragen werden,
einen primärseitigen Schalter (T1) zum Ein- und Ausschalten des Primärstroms durch die primärseitige Hauptwicklung in Antwort auf ein Steuersignal (G) der Regelschaltung,
eine primärseitige Hilfswicklung (HW), in der nach dem Ausschalten des primärseitigen Schalters ein Spannungspuls induziert wird, wobei die Höhe des Spannungspulses von einer Last an der Sekundärseite abhängt,
eine Abtasthaltevorrichtung (S&H) zum Abtasten und Speichern einer Höhe des Spannungspulses zum Erzeugen einer Regelgröße, wobei das Steuersignal auf der Basis der Regelgröße erzeugt wird,
wobei die Regelschaltung einen Primärstromkomparator (102) aufweist, der dazu ausgelegt ist, einen Ausschaltzeitpunkt des primärseitigen Schalters in Abhängigkeit von dem Primärstrom zu bestimmen, und wobei die Regelschaltung dazu ausgelegt ist, die Regelgröße so an den Primärstromkomparator zurückzuführen, dass der Ausschaltzeitpunkt des primärseitigen Schalters zusätzlich in Abhängigkeit von der Regelgröße so beeinflussbar ist, dass die Zeitdauer, während welcher der Primärstrom durch die primärseitige Hauptwicklung fließt, unterschiedlich reduziert wird,
wobei die Regelschaltung ausgelegt ist, um einen Einschaltzeitpunkt des primärseitigen Schalters (T1) in Abhängigkeit von der Regelgröße zu bestimmen und dadurch die Zeitdauer, in der kein Primärstrom durch die primärseitige Hauptwicklung fließt, festzulegen,
wobei die Regelschaltung ausgelegt ist, um den Einschaltzeitpunkt des primärseitigen Schalters (T1) durch Vergleich der Regelgröße mit einer Vergleichsspannung zu bestimmen, und weiter so ausgebildet ist, dass die Vergleichsspannung in Abhängigkeit von der Regelgröße bestimmt wird, so dass bei geringer Last die Energie pro Puls verringert wird.

2. Schaltnetzteil nach Anspruch 1, das einen Spannungsteiler (R3, R4) aufweist, und wobei die Regelgröße über den Spannungsteiler an den Primärstromkomparator zurückgeführt ist.

3. Schaltnetzteil nach einem der Ansprüche 1 oder 2, das einen Verstärker (OP1) aufweist, und wobei ein Ausgang der Abtasthaltevorrichtung so mit dem Verstärker (OP1) verbunden ist, dass die Regelgröße vor der Rückführung verstärkt wird.

4. Schaltnetzteil nach Anspruch 3, wobei der Verstärker ein Operationsverstärker ist, und ein Ausgang der Abtasthaltevorrichtung mit einem nicht-invertierenden Eingang des Operationsverstärkers verbunden ist, ein Ausgang des Operationsverstärkers mit einem Anschluss des Spannungsteilers verbunden ist, und ein invertierender Eingang des Operationsverstärkers mit einem Netzwerk verbunden ist.

5. Schaltnetzteil nach einem der Ansprüche 3 oder 4, wobei der Spannungsteiler aus einem ersten und einem zweiten Widerstand (R3, R4) besteht, wobei ein erster Anschluss des ersten Widerstandes (R3) mit einem Ausgang des Verstärkers verbunden ist und ein zweiter Anschluss des ersten Widerstandes (R3) mit einem Eingang des Primärstromkomparators und mit einem ersten Anschluss des zweiten Widerstandes (R4) verbunden ist; und wobei ein zweiter Anschluss des zweiten Widerstandes mit einem den Primärstrom führenden Anschluss des primärseitigen Schalters verbunden ist.

6. Schaltnetzteil nach Anspruch 1, das einen Verstärker (OP1) und ein Rückkopplungsnetzwerk aufweist, wobei ein nicht-invertierender Eingang des Verstärkers mit einem Ausgang der Abtasthaltevorrichtung (S&H) verbunden ist, ein Ausgang des Verstärkers über das Rückkopplungsnetzwerk mit einem invertierenden Eingang des Verstärkers verbunden ist,
wobei das Rückkopplungsnetzwerk einen ersten Widerstand (R1), einen Kondensator (C1), der mit dem ersten Widerstand in Serie geschaltet ist, einen zweiten Widerstand (R6), der parallel zu dem ersten Widerstand (R1) und dem Kondensator (C1) geschaltet ist, und einen dritten Widerstand (R7), der seriell zu der Parallelschaltung aus dem ersten, dem zweiten Widerstand und dem Kondensator geschaltet ist und der mit Masse verbunden ist, aufweist.

7. Schaltnetzteil nach einem der Ansprüche 1 oder 6, das ein Korrekturnetzwerk aufweist und wobei das Korrekturnetzwerk so zwischen der primärseitigen Hilfswicklung und der Abtasthaltevorrichtung (S&H) geschaltet ist, dass die aus dem Spannungspuls an der primärseitigen Hilfswicklung erzeugte Spannung in Abhängigkeit von einer an der Sekundärseite anliegenden Last steigt.

8. Verfahren zum Regeln der Ausgangsspannung und/oder des Ausgangsstromes durch ein primärseitig gesteuertes Schaltnetzteil mit einer Regelschaltung, wobei das Schaltnetzteil aufweist:
einen Transformator mit einer primärseitigen (PW) und einer sekundärseitigen (VS) Hauptwicklung, wobei elektrische Energiepulse von der primärseitigen zur sekundärseitigen Hauptwicklung übertragen werden,
einen primärseitigen Schalter (T1) zum Ein- und Ausschalten des Primärstroms durch die primärseitige Hauptwicklung in Antwort auf ein Steuersignal (G) der Regelschaltung,
eine primärseitige Hilfswicklung (HW), in der nach dem Ausschalten des primärseitigen Schalters ein Spannungspuls induziert wird, wobei die Höhe des Spannungspulses von einer Last an der Sekundärseite abhängt,
eine Abtasthaltevorrichtung (S&H) zum Abtasten und Speichern einer Höhe des Spannungspulses zum Erzeugen einer Regelgröße, wobei das Steuersignal auf der Basis der Regelgröße erzeugt wird,
und wobei das Verfahren folgenden Schritte aufweist,
Vergleichen des Primärstromes mit einer Referenz, um einen Ausschaltzeitpunkt des primärseitigen Schalters abhängig von dem Primärstrom zu bestimmen,
Rückführen der Regelgröße an einen Primärstromkomparator, um den Ausschaltzeitpunkt des primärseitigen Schalters in dem Schritt des Vergleichens so zu beeinflussen, dass die Zeitdauer, während welcher der Primärstrom durch die primärseitige Hauptwicklung fließt, unterschiedlich reduziert wird,
Bestimmen eines Einschaltzeitpunkts des primärseitigen Schalters in Abhängigkeit von der Regelgröße und dadurch Festlegen der Zeitdauer, in der kein Primärstrom durch die primärseitige Hauptwicklung fließt,
Bestimmen des Einschaltzeitpunkts des primärseitigen Schalters durch Vergleich der Regelgröße mit einer Vergleichsspannung, und
Bestimmen der Vergleichsspannung in Abhängigkeit von der Regelgröße, so dass bei geringer Last die Energie pro Puls verringert wird.

9. Verfahren nach Anspruch 8,
wobei in einem weiteren Schritt die Regelgröße verstärkt wird, bevor sie rückgeführt wird.

## Claims

1. Switching power supply controlled by the primary side with a control circuit for controlling the output voltage and/or the output current, the switching power supply comprising:
a transformer with a primary-sided (PW) and a secondary-sided (VS) main winding, wherein electrical energy pulses are transmitted from the primary-sided to the secondary-sided main winding,
a primary-sided switch (T1) for switching on and off the primary current through the primary-sided main winding in response to a control signal (G) of the control circuit, a primary-sided auxiliary winding (HW), in which a voltage pulse is induced after switching off the primary-sided switch, wherein the level of the voltage pulse depends on a load at the secondary side,
a sample and holding device (S&H) for sampling and storing a level of the voltage pulse for generating a control variable, wherein the control signal is generated on the basis of the control variable,
wherein the control circuit comprises a primary current comparator (102), which is operable to determine a switch-off point in time of the primary-sided switch depending on the primary current, and
wherein the control circuit is operable to feed back the control variable to the primary current comparator such that the switch-off point in time of the primary-sided switch can be influenced additionally depending on the control variable such that the duration during which the primary current flows through the primary-sided main winding is reduced differently,
wherein the control circuit is operable to determine a switch-on point in time of the primary-sided switch depending on the control variable and thereby to determine the duration during which no primary current flows through the main winding,
wherein the control circuit is operable to determine the switch-on time of the primary-sided switch (T1) by a comparison of the control variable with a comparator voltage, and is further designed that the comparator voltage is determined depending on the control variable so that at low load the energy per pulse is reduced.

2. Control circuit as claimed in claim 1, comprising a voltage divider (R3, R4), and
wherein the control variable is fed back to the primary current comparator via the voltage divider.

3. Control circuit as claimed in claim 1 or 2, comprising an amplifier (OP1), and
wherein an output of the sample holding device is connected to the amplifier (OP1) such that the control variable is amplified before the feedback.

4. Control circuit as claimed in claim 3,
wherein the amplifier is an operation amplifier, and an output of the sample and holding device is connected to a non-inverting input of the operation amplifier, an output of the operation amplifier is connected to a terminal of the voltage divider, and an inverting input of the operation amplifier is connected to a network.

5. Control circuit as claimed in claim 3 or 4,
wherein the voltage divider consists of a first and a second resistor (R3, R4), wherein a first terminal of the first resistor (R3) is connected to an output of the amplifier, and a second terminal of the first resistor (R3) is connected to an input of the primary current comparator and to a first terminal of the second resistor (R4);
and wherein a second terminal of the second resistor is connected to the primary current conducting terminal of the primary-sided switch.

6. Control circuit as claimed in claim 1,
comprising an amplifier (OP1) and a feedback network, wherein a non-inverting input of the amplifier is connected to an output of the sample and holding device (S&H), an output of the amplifier is connected via the feedback network to an inverting input of the amplifier, wherein the feedback network comprises a first resistor (R1), a capacitor (C1), which is connected in series with the first resistor, a second resistor (R6), which is connected in parallel to the first resistor (R1) and the capacitor (C1), and a third resistor (R7), which is connected in series to the parallel connection of the first, the second resistor and the capacitor, and which is connected to ground.

7. Control circuit as claimed in claim 1 or 6, comprising a correction network,
wherein the correction network is connected between the primary-sided auxiliary winding and the sample and holding device (S&H) such that the voltage generated from the voltage pulse at the primary-sided auxiliary winding rises depending on a load applying at the secondary side.

8. Method of controlling the output voltage and/or output current in a power switching supply controlled by the primary side, the power switching supply comprising:
a transformer with a primary-sided (PW) and a secondary-sided (VS) main winding, wherein electrical energy pulses are transmitted from the primary-sided to the secondary-sided main winding,
a primary-sided switch (T1) for switching on and off the primary current through the primary-sided main winding in response to a control signal (G) of the control circuit,
a primary-sided auxiliary winding (HW), in which a voltage pulse is induced after switching off the primary-sided switch, wherein the level of the voltage pulse depends on a load at the secondary side,
a sample and holding device (S&H) for sampling and storing a level of the voltage pulse for generating a control variable, wherein the control signal is generated on the basis of the control variable,
the method comprising the following steps,
comparing the primary current with a reference to determine a switch-off point in time of the primary-sided switch depending on the primary current,
feeding back the control variable to a primary current comparator to influence the switch-off time of the primary-sided switch in the step of comparison in a manner that the duration during which the primary current flows through the primary-sided main winding is reduced differently,
determining a switch-on point in time of the primary-sided switch depending on the control variable and thus the time duration during which no primary current flows through the primary-sided main winding,
determining the switch-on time of the primary-sided switch (T1) by a comparison of the control variable with a comparator voltage, and
determining the comparator voltage depending on the control variable, so that at low load the energy per pulse is reduced.

9. Method as claimed in claim 8,
wherein in a further step the control variable is amplified before it is fed back.

## Revendications

1. Circuit d'alimentation de puissance à découpage à régulation côté primaire, avec un circuit de régulation pour réguler la tension de sortie et/ou le courant de sortie, qui comprend:
un transformateur avec un enroulement principal côté primaire (PW) et un enroulement principal côté secondaire (VS), dans lequel des impulsions d'énergie électrique sont transmises du côté primaire à l'enroulement principal côté secondaire,
un commutateur côté primaire (T1) pour activer et désactiver le courant primaire à travers l'enroulement principal côté primaire en réponse à un signal de régulation (G) du circuit de régulation,
un enroulement auxiliaire côté primaire (HW) dans lequel une impulsion de tension est induite après la désactivation du commutateur côté primaire, l'amplitude de l'impulsion de tension dépendant d'une charge côté secondaire,
un dispositif d'échantillonnage et de maintien (S&H) pour échantillonner et stocker une amplitude de l'impulsion de tension afin de générer une variable de régulation, le signal de régulation étant généré sur la base de la variable de régulation,
dans lequel le circuit de régulation comprend un comparateur de courant primaire (102) conçu pour déterminer un temps de coupure de l'interrupteur côté primaire en fonction du courant primaire, et
dans lequel le circuit de régulation est conçu pour réinjecter la variable de régulation dans le comparateur de courant primaire de telle sorte que le temps de coupure de l'interrupteur côté primaire puisse être influencé en plus en fonction de la variable de régulation de telle sorte que la période de temps pendant laquelle le courant primaire circule à travers l'enroulement principal côté primaire soit réduite différemment,
dans lequel le circuit de régulation est conçu pour déterminer un temps d'activation de l'interrupteur côté primaire (T1) en fonction de la variable de régulation et pour déterminer ainsi la période de temps pendant laquelle aucun courant primaire ne circule à travers l'enroulement principal côté primaire,
dans lequel le circuit de régulation est conçu pour déterminer le temps d'activation de l'interrupteur côté primaire (T1) en comparant la variable de régulation avec une tension de comparaison, et est en outre conçu pour déterminer la tension de comparaison en fonction de la variable de régulation de sorte qu'à faible charge, l'énergie par impulsion est réduite.

2. Circuit d'alimentation de puissance à découpage selon la revendication 1,
qui possède un diviseur de tension (R3, R4), et
dans lequel la variable de régulation est renvoyée au comparateur de courant primaire par l'intermédiaire de diviseurs de tension.

3. Circuit d'alimentation de puissance à découpage selon l'une des revendications 1 ou 2, qui comporte un amplificateur (OP1), et
dans lequel une sortie du dispositif d'échantillonnage et de maintien est connectée à l'amplificateur (OP1) de telle sorte que la variable de régulation est amplifiée avant la rétroaction.

4. Circuit d'alimentation de puissance à découpage selon la revendication 3, dans lequel l'amplificateur est un amplificateur opérationnel, et une sortie du dispositif d'échantillonnage et de maintien est connectée à une entrée non inverseuse de l'amplificateur opérationnel, une sortie de l'amplificateur opérationnel est connectée à une borne du diviseur de tension, et une entrée inverseuse de l'amplificateur opérationnel est connectée à un réseau.

5. Circuit d'alimentation de puissance à découpage selon l'une des revendications 3 ou 4, dans lequel le diviseur de tension est constitué d'une première et d'une deuxième résistance (R3, R4), dans laquelle une première borne de la première résistance (R3) est reliée à une sortie de l'amplificateur et une deuxième borne de la première résistance (R3) est reliée à une entrée du comparateur de courant primaire et à une première borne de la deuxième résistance (R4);
et dans lequel une deuxième borne de la deuxième résistance est connectée à une borne de transport de courant primaire de l'interrupteur du côté primaire.

6. Circuit d'alimentation de puissance à découpage selon la revendication 1,
comprenant un amplificateur (OP1) et un réseau de rétroaction,
dans lequel une entrée non inverseuse de l'amplificateur est connectée à une sortie du dispositif d'échantillonnage et de maintien (S&H), une sortie de l'amplificateur est connectée à une entrée inverseuse de l'amplificateur via le réseau de rétroaction,
le réseau de rétroaction comprenant une première résistance (R1), un condensateur (C1) connecté en série avec la première résistance, une deuxième résistance (R6) connectée en parallèle avec la première résistance (R1) et le condensateur (C1), et une troisième résistance (R7) connectée en série avec la connexion parallèle de la première, de la deuxième et du condensateur et reliée à la terre.

7. Circuit d'alimentation de puissance à découpage selon l'une des revendications 1 ou 6,
qui comprend un réseau de correction, et dans lequel le réseau de correction est connecté entre l'enroulement auxiliaire côté primaire et le dispositif de maintien de balayage (S&H) de telle sorte que la tension générée à partir de l'impulsion de tension sur l'enroulement auxiliaire côté primaire augmente en fonction d'une charge appliquée sur le côté secondaire.

8. Procédé de régulation de la tension de sortie et/ou du courant de sortie par une alimentation à découpage contrôlée côté primaire avec un circuit de régulation,
dans lequel l'unité d'alimentation à découpage a un transformateur ayant un enroulement principal côté primaire (PW) et un enroulement principal côté secondaire (VS), dans lequel des impulsions d'énergie électrique sont transmises du côté primaire à l'enroulement principal côté secondaire,
un interrupteur côté primaire (T1) pour activer et désactiver le courant primaire à travers l'enroulement principal côté primaire en réponse à un signal de régulation (G) du circuit de régulation,
un enroulement auxiliaire côté primaire (HW) dans lequel une impulsion de tension est induite après la désactivation de l'interrupteur côté primaire, dans lequel l'amplitude de l'impulsion de tension dépend d'une charge du côté secondaire,
un dispositif d'échantillonnage et de maintien (S&H) pour échantillonner et stocker une amplitude de l'impulsion de tension afin de générer une variable de régulation,
dans lequel le signal de régulation est généré sur la base de la variable de régulation, et dans lequel le procédé comprend les étapes suivantes:
comparer le courant primaire avec une référence pour déterminer un temps de coupure de l'interrupteur côté primaire en fonction du courant primaire,
renvoyer la variable de régulation à un comparateur de courant primaire pour influencer le temps de coupure de l'interrupteur côté primaire dans l'étape de comparaison de sorte que la période de temps pendant laquelle le courant primaire circule à travers l'enroulement principal côté primaire soit réduite différemment,
déterminer un temps de mise en marche de l'interrupteur côté primaire en fonction de la variable de régulation, et
déterminer ainsi la période de temps pendant laquelle aucun courant primaire ne circule à travers l'enroulement principal côté primaire,
déterminer le temps d'enclenchement de l'interrupteur côté primaire en comparant la variable de régulation à une tension de référence, et
déterminer la tension de référence en fonction de la grandeur réglée de manière à ce que l'énergie par impulsion soit réduite à faible charge.

9. Procédé selon la revendication 8,
dans lequel, dans une étape ultérieure, la variable contrôlée est amplifiée avant d'être réinjectée.
